(19) Europäisches Patentamt
European Patent Office
Office européen des brevets

(11) EP 2 998 114 A1

(12) **EUROPEAN PATENT APPLICATION**
published in accordance with Art. 153(4) EPC

(43) Date of publication:
**23.03.2016 Bulletin 2016/12**

(21) Application number: **13884541.7**

(22) Date of filing: **19.12.2013**

(51) Int Cl.:
***B32B 27/30*** *(2006.01)*
***B29C 39/10*** *(2006.01)*
***C08F 220/20*** *(2006.01)*
***C08F 290/06*** *(2006.01)*
***G09F 9/00*** *(2006.01)*
***C08F 222/10*** *(2006.01)*

(86) International application number:
**PCT/JP2013/084163**

(87) International publication number:
**WO 2014/184983 (20.11.2014 Gazette 2014/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.05.2013 JP 2013103769**

(71) Applicant: **Mitsubishi Rayon Co., Ltd.**
**Tokyo 100-8253 (JP)**

(72) Inventors:
- **YAMAZAWA Hideto**
**Otake-shi**
**Hiroshima 739-0693 (JP)**
- **OKAZAKI Shogo**
**Otake-shi**
**Hiroshima 739-0693 (JP)**
- **KAWAI Osamu**
**Otake-shi**
**Hiroshima 739-0693 (JP)**

(74) Representative: **TBK**
**Bavariaring 4-6**
**80336 München (DE)**

# (54) RESIN LAMINATE, METHOD FOR PRODUCING SAME AND DISPLAY FRONT PANEL

(57) A resin laminate including a cured film layer; and a resin substrate, wherein the cured film layer is obtained by curing a curable composition that contains (A) at least one of multifunctional monomer selected from dipentaerythritol penta(meth)acrylate and dipentaerythritol hexa(meth)acrylate, (B) a multifunctional monomer that has at least 3 (meth)acryloyl groups and is not component (A), (C) a multifunctional monomer having two (meth)acryloyl groups, and (D) a polymerization initiator; the total amount of components (A), (B) and (C) is 100 parts by mass; based on the total 100 parts by mass of components (A), (B) and (C), the content of component (A) is 20-50 parts by mass, the content of component (B) is 20~60 parts by mass, and the content of component (C) is 15-35 parts by mass; the thickness of the cured film layer is 22-40 μm; and the cured film layer is laminated on a surface of the resin substrate.

*FIG. 1*

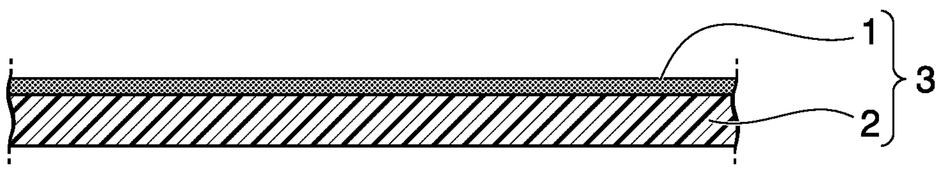


EP 2 998 114 A1

**Description**

Field of the Invention

The present invention relates to a resin laminate and its production method and to a display front panel.
The present application is based upon and claims the benefit of priority to Japanese Patent Application No. 2013-103769, filed May 16, 2013. The entire contents of the application are incorporated herein by reference.

Background Art

To protect surfaces of various displays such as CRT display units, liquid-crystal TV sets, cell phones and the like, transparent glass plates and resin plates have been used conventionally has a display front panel. Also, as a recent trend, touch screen display panels are often employed.
Glass plates with excellent scratch resistance and surface hardness are used as front panels for touch-panel screens. When a glass plate is used as a display front panel, it needs to be made thinner to satisfy demand for a lightweight low-cost product. However, since cracking tends to occur in thin glass plates, display front panels made of resin plates are being studied to achieve both low cost and light weight. In addition, display front panels of various shapes are also in demand. To best suit requirements for design flexibility, studies of display front panels are being conducted on resin plates that exhibit better processability than glass plates.
However, since transparent resin plates are softer than glass, damage caused by scratches or the like tends to occur.
To improve the scratch resistance and surface hardness of a resin plate surface, a known method is to form a cross-linked cured film on a substrate surface by curing a curable composition containing a multifunctional monomer such as multifunctional (meth)acrylate.
To improve the scratch resistance and surface hardness of a resin plate surface, for example, patent publication 1 proposes the following method: to obtain a synthetic resin shaped article with surface properties that exhibit wear resistance, surface smoothness, flexibility, heat resistance, solvent resistance, durability, and adhesiveness to the substrate, a cross-linked cured film is formed on a surface of a synthetic resin shaped article by curing in air a film-forming composition containing a specific multifunctional monomer through irradiation of active energy rays.
However, since the above film-forming composition is cured in all, surface defects tend to occur, such as spots caused by lint or dust in the air and flow patterns formed during a coating process. Another problem is that since a film-forming composition curable in air is used, curing may be inhibited by oxygen during a curing process by active energy rays. Moreover, vaporizing solvents in curing and drying processes to obtain a cross-linked cured film layer is not preferred considering the earth's environmental protection issues.
To solve the aforementioned problems, for example, patent publication 2 proposes a method for producing an acrylic resin laminate by cast polymerization that includes a step for coating a curable composition on at least part of the inner surface of a mold and then curing the coating, and a step for pouring an acrylic resin material into the mold.
Using the production method of an acrylic resin laminate disclosed in patent publication 2, since the shape of a mold surface is transferred to the laminate, a plate with a hardened surface is obtained where surface conditions are significantly improved and a lower curing result caused by oxygen inhibition is not observed. However, although the cured film provided on the display front panel has excellent scratch resistance, its surface hardness is insufficient. Thus, further improvement is required. In addition, when a display front panel uses a laminate made by laminating a cured film having improved surface hardness, cracking tends to occur during the lamination process. Accordingly, such a resin laminate is not preferred for use as a display front panel for a touch-panel screen.

PRIOR ART PUBLICATION

PATENT PUBLICATION

patent publication 1: JP S54-97633A
patent publication 2: JP 2005-248070A

SUMMARY OF THE INVENTION

PROBLEMS TO BE SOLVED BY THE INVENTION

The objective of the present invention is to provide a lightweight resin laminate with excellent design flexibility for use as a display front panel for touch-panel screens, and to provide a method for producing such a resin laminate at low cost by laminating on the surface of a resin substrate a cured film layer with excellent transparency, scratch resistance, surface hardness and crack resistance.

Also, the objective of the present invention is to provide a display front panel that uses a resin laminate, formed by laminating on the surface of a resin substrate a cured film layer having excellent properties for transparency, scratch resistance, surface hardness and crack resistance, so that such a display front panel is also used for a touch-panel screen.

SOLUTIONS TO THE PROBLEMS

The aforementioned problems are solved by the embodiments of the present invention described in [1]~[13] below:

[1] A resin laminate formed by laminating on a resin substrate surface a 22~40 μm-thick cured film layer of a curable composition containing the following components:

<curable composition>

(A) 20~50 parts by mass of at least one of multifunctional monomer selected from dipentaerythritol penta(meth)acrylate and dipentaerythritol hexa(meth)acrylate;
(B) 20~60 parts by mass of a multifunctional monomer that has at least 3 (meth)acryloyl groups and is not a multifunctional monomer (A);
(C) 15~35 parts by mass of a multifunctional monomer having two (meth)acryloyl groups; and
(D) a polymerization initiator.

(the total amount of multifunctional monomers (A), (B) and (C) is set to be 100 parts by mass).

[2] The resin laminate described in [1], in which the thickness of the cured film layer is 25~40 μm.

[3] The resin laminate described in [1] or [2], in which the cured film layer is made of a curable composition containing the following respective amounts of multifunctional monomer (A), multifunctional monomer (B) and multifunctional monomer (C), and the thickness of the cured film layer is 25-30 μm:

25~45 part by mass of multifunctional monomer (A);
20~60 parts by mass of multifunctional monomer (B); and
20~33 parts by mass of multifunctional monomer (C).

(the total amount of multifunctional monomers (A), (B) and (C) is set to be 100 parts by mass)

[4] The resin laminate described in any of [1]~[3], which has a pencil hardness of 6H or higher.

[5] The resin laminate described in any of [1]~[3], which has a pencil hardness of 8H or higher.

[6] The resin laminate described in any of [1]~[5], which has crack resistance Properties that prevent cracking when the laminate is bent at a curvature radius of 60 mm in crack resistance evaluation testing conducted by the following evaluation method.

<evaluation method of crack resistance properties>

A 30 mm-wide, 120 mm-long and 1 mm-thick resin laminate is placed on a mold with a raised pattern with a predetermined curvature radius in such a way that the surface of a cured film layer faces outward. Then, after the resin laminate is bent along the mold with a raised pattern and held in that position for 30 seconds, the surface of the cured

film layer of the resin laminate is visually observed to determine if cracking has occurred.

[7] The resin laminate described in any of [1]~[5], which has crack resistance properties that prevent cracking when the laminate is bent at a curvature radius of 40 mm in crack resistance evaluation testing conducted by the following evaluation method.

<evaluation method of crack resistance>

A 30 mm-wide, 120 mm-long and 1 mm-thick resin laminate is placed on a mold with a raised pattern with a predetermined curvature radius in such a way that the surface of the cured film layer faces outward. Then, after the resin laminate is bent along the mold with a raised pattern and held in that position for 30 seconds, the surface of the cured film layer of the resin laminate is visually observed to determine if cracking has occurred.

[8] The resin laminate described in any of [1]~[7], where the resin substrate is a methacrylic resin having a methyl methacrylate unit as its main component.

[9] A method for producing a resin laminate, which includes the following steps:

by coating a curable composition described below on the inner surface of a die and curing the coating, forming a laminate mold with a 22~40 μm-thick cured film layer of the curable composition; pouring into the laminate mold a resin substrate material containing a radically polymerizable monomer having a main component of methyl methacrylate in such a way that the resin substrate material makes contact with the cured film layer of the laminate mold; and forming a resin substrate by polymerizing the resin substrate material through cast polymerization.

<curable composition>

(A) 20~50 parts by mass of at least one of multifunctional monomer selected from dipentaerythritol penta(meth)acrylate and dipentaerythritol hexa(meth)acrylate;
(B) 20~60 parts by mass of a multifunctional monomer that has at least 3 (meth)acryloyl groups and is not multifunctional monomer (A);
(C) 15~35 parts by mass of a multifunctional monomer having two (meth)acryloyl groups; and
(D) a polymerization initiator.

(the total amount of multifunctional monomers (A), (B) and (C) is set to be 100 parts by mass).

[10] The method for producing a resin laminate described in [9], where the thickness of the cured film layer is 25~40 μm.

[11] The method for producing a resin laminate described in [9] or [10], where the cured film layer is made of a curable composition containing the following amounts of multifunctional monomer (A), multifunctional monomer (B) and multifunctional monomer (C) respectively, and the thickness of the cured film layer is 25~30 μm:

25~45 parts by mass of multifunctional monomer (A);
20~60 parts by mass of multifunctional monomer (B); and
20~33 parts by mass of multifunctional monomer (C).

(the total amount of multifunctional monomers (A), (B) and (C) is set to be 100 parts by mass)

[12] A display front panel formed by using the resin laminate described in any of [1]~[8].

[13] A display front panel formed by using a resin laminate obtained by the method described in any of [9]~[11].

[1'] A resin laminate formed with a cured film layer and a resin substrate, where the cured film layer is obtained by

curing a curable composition containing:

(A) at least one of multifunctional monomer selected from dipentaerythritol penta(meth)acrylate and dipentaerythritol hexa(meth)acrylate,
(B) a multifunctional monomer that has at least 3 (meth)acryloyl groups and is not component (A),
(C) a multifunctional monomer having two (meth)acryloyl groups, and
(D) a polymerization initiator;
the total amount of components (A), (B) and (C) is 100 parts by mass, and based on the total 100 parts by mass of components (A), (B) and (C), the content of component (A) is 20~50 parts by mass, the content of component (B) is 20~60 parts by mass, and the content of component (C) is 15~35 parts by mass;
the thickness of the cured film layer is 22~40 μm; and
the cured film layer is laminated on the surface of the resin substrate.

[2'] The resin laminate described in [1'], in which the thickness of the cured film layer is 25~40 μm.

[3'] The resin laminate described in [1'] or [2'], where the cured film layer is obtained by curing a curable composition containing 24~45 parts by mass of component (A), 20~60 parts by mass of component (B), and 20~33 parts by mass of component (C), based on 100 parts by mass of the total amount of components (A), (B) and (C), and the thickness of the cured film layer is 25~30 μm.

[4'] The resin laminate described in any of [1']~[3'], which has a pencil hardness of at least 6H but no higher than 9H.

[5'] The resin laminate described in any of [1']~[3'], which has a pencil hardness of at least 8H but no higher than 9H.

[6'] The resin laminate described in any of [1']~[5'], which has crack resistance properties that prevent cracking when the resin laminate is bent at a curvature radius of 60 mm.

[7'] The resin laminate described in any of [1']~[5'], which has crack resistance properties that prevent cracking when the resin laminate is bent at a curvature radius of 40 mm.

[8'] The resin laminate described in any of [1']~[7'], where the resin substrate is a methacrylic resin having a methyl methacrylate unit as its main component.

[9'] A method for producing a resin laminate, the method including the following steps:

by coating a curable composition described below on the inner surface of a die and curing the coating, forming a laminate mold with a 22~40 μm-thick cured film layer of the curable composition;
pouring into the laminate mold a resin substrate material containing a radically polymerizable monomer having a main component of methyl methacrylate in such a way that the resin substrate material makes contact with the cured film layer of the laminate mold; and
forming a resin substrate by cast polymerizing the resin substrate material poured into the laminate mold.

In such a method, the cured film layer is formed on a surface of the resin substrate,
the curable composition contains (A) at least one of multifunctional monomer selected from dipentaerythritol penta(meth)acrylate and dipentaerythritol hexa(meth)acrylate, (B) a multifunctional monomer that has at least 3 (meth)acryloyl groups and is not=component (A), (C) a multifunctional monomer having two (meth)acryloyl groups, and (D) a polymerization initiator,
the total amount of components (A), (B) and (C) is 100 parts by mass, and
based on the total 100 parts by mass of components (A), (B) and (C), the content of component (A) is 20~50 parts by mass, the content of component (B) is 20~60 parts by mass, and the content of component (C) is 15~35 parts by mass.

[10'] The method for producing a resin laminate described in [9'], where the thickness of the cured film layer is 25~40 μm.

[11'] The method for producing a resin laminate described in [9'] or [10'], where the cured film layer is obtained by curing a curable composition which contains component (A) at 24~45 parts by mass, component (B) at 20~60 parts

by mass, and component (C) at 20~33 parts by mass, all based on 100 parts by mass of the total amount of components (A), (B) and (C), and
the thickness of the cured film layer is 25~30 μm.

[12'] A display front panel formed by using the resin laminate described in any of [1']~[8'].

[13'] A display front panel formed using a resin laminate obtained by the method described in any of [9']~[11'].

It is an option for the resin laminate according to an embodiment of the present invention to have a cured film layer laminated only on either surface of a resin substrate or laminated on both surfaces of the resin substrate.
In the embodiments of the present invention, "(meth)acrylate" indicates at least one type selected from "acrylates" and "methacrylates," and a "(meth)acryloyl group" indicates at least one type selected from "acryloyl groups" and "methacryloyl" groups.

EFFECTS OF THE INVENTION

Since the resin laminate with a cured film layer formed thereon according to an embodiment of the present invention has excellent transparency, scratch resistance, surface hardness and crack resistance, it is preferably used as the front panel of various displays including touch-panel screens.

BRIEF DESCRIPTION OF THE DRAWINGS

FIG. 1 is a schematic cross-sectional view of a resin laminate according to an embodiment of the present invention, where a cured film layer is laminated on either surface of a resin substrate; and
FIG. 2 is a schematic cross-sectional view of a resin laminate according to an embodiment of the present invention, where a cured film layer is laminated on each of both surfaces of a resin substrate.

DETAILED DESCRIPTION OF THE EMBODIMENTS

The present invention is described in the following.

(Curable Composition)

The curable composition used in an embodiment of the present invention contains later-described multifunctional monomer (A), later-described multifunctional monomer (B), later-described multifunctional monomer (C), and later-described polymerization initiator (D). The total amount of multifunctional monomers (A), (B) and (C) is 100 parts by mass, and based on the total 100 parts by mass of multifunctional monomers (A), (B) and (C), the content of multifunctional monomer (A) is 20~50 parts by mass, the content of multifunctional monomer (B) is 20~60 parts by mass, and the content of multifunctional monomer (C) is 15~35 parts by mass.
When the content of multifunctional monomer (A) is at least 20 parts by mass, the cured film layer exhibits excellent scratch resistance and surface hardness. Also, when the content of multifunctional monomer (A) is no greater than 50 parts by mass, the rate of curing contraction decreases when the curable component is cured, resulting in excellent crack resistance of the cured film layer as well as excellent adhesiveness of the cured film layer to a later-described resin substrate. Based on the total 100 parts by mass of multifunctional monomers (A), (B) and (C), the lower limit of multifunctional monomer (A) is preferred to be 25 parts by mass and the upper limit of multifunctional monomer (A) is preferred to be 45 parts by mass.
Namely, the content of multifunctional monomer (A) is preferred to be at least 20 parts by mass but no greater than 50 parts by mass, more preferably, at least 25 parts by mass but no greater than 45 parts by mass, based on the total 100 parts by mass of multifunctional monomers (A), (B) and (C).
When the content of multifunctional monomer (B) is at least 20 parts by mass, the cured film layer exhibits excellent scratch resistance and surface hardness, and when the content of multifunctional monomer (B) is no greater than 60 parts by mass, the rate of curing contraction decreases when the curable composition is cured, resulting in excellent crack resistance of the cured film layer as well as excellent adhesiveness of the cured film layer to the resin substrate.
Namely, the content of multifunctional monomer (B) is preferred to be at least 20 parts by mass but no greater than 60 parts by mass, based on the total 100 parts by mass of multifunctional monomers (A), (B) and (C).

When the content of multifunctional monomer (C) is at least 15 parts by mass, the rate of curing contraction decreases when the curable composition is cured, resulting in excellent crack resistance of the cured film layer. Also, when the cured film layer is laminated on the surface of a resin substrate, warping is more likely to be suppressed in the resin laminate. When the content of multifunctional monomer (C) is no greater than 35 parts by mass, the cured film layer exhibits excellent scratch resistance and surface hardness. Based on the total 100 parts by mass of multifunctional monomers (A), (B) and (C), the lower limit of multifunctional monomer (C) is preferred to be 20 parts by mass and the upper limit of multifunctional monomer (C) is preferred to be 33 parts by mass.

Namely, the content of multifunctional monomer (C) is preferred to be at least 15 parts by mass but no greater than 35 parts by mass, more preferably, at least 20 parts by mass but no greater than 33 parts by mass, based on the total 100 parts by mass of multifunctional monomers (A), (B) and (C).

If necessary, the curable composition of an embodiment of the present invention may contain a monomer having a (meth)acryloyl group, as well as various additives such as a releasing agent, lubricant, plasticizer, antioxidant, antistatic agent, photostabilizer, ultraviolet absorber, flame retardant, auxiliary flame retardant, polymerization inhibitor, filler, pigment, dye, silane coupling agent, leveling agent, defoaming agent, fluorescent agent, chain transfer agent, and the like.

(Multifunctional Monomer A)

Multifunctional monomer (A) is at least one of monomer or monomer mixture selected from dipentaerythritol penta(meth)acrylate and dipentaerythritol hexa(meth)acrylate.

(Multifunctional Monomer B)

Multifunctional monomer (B) is a monomer having at least three but no greater than 20 (meth)acryloyl groups that exclude a multifunctional monomer (A).

Examples of multifunctional monomers (B) are those where a residue bonding each (meth)acryloyl group is a hydrocarbon group or its derivative, and ether bonds, thioether bonds, ester bonds, amide bonds, urethane bonds or the like may be contained in the molecule.

Specific examples of multifunctional monomer (B) are ester compounds obtained from 1 mole of polyhydric alcohol and at least 3 moles of (meth)acrylic acid or its derivative; and linear ester compounds obtained from polyhydric alcohol, polycarboxylic acid or its anhydride, and (meth)acrylic acid or its derivative.

Here, "polyhydric alcohol" indicates an alcohol having two or more hydroxy groups in the molecule, and "polycarboxylic acid" indicates a carboxylic acid having two or more carboxyl groups in the molecule.

A "derivative of (meth)acrylic acid" indicates a compound where a functional group or hydrogen atom of (meth)acrylic acid is substituted by another functional group.

A "derivative of polycarboxylic acid" indicates a compound in which a functional group or a hydrogen atom of the polycarboxylic acid is substituted by another functional group.

"Linear" indicates a straight chain or branched chain.

Examples of an ester compound obtained from 1 mole of a polyhydric alcohol, 3 moles or more of (meth)acrylic acid or its derivative are trimethylolpropane tri(meth)acrylate, trimethylolethane tri(meth)acrylate, ethylene oxide adduct of trimethylolpropane tri(meth)acrylate, propylene oxide adduct of trimethylolpropane tri(meth)acrylate, ditrimethylolpropane tetra(meth)acrylate, pentaglycerol tri(meth)acrylate, pentaerythritol tri(meth)acrylate, pentaerythritol tetra(meth)acrylate, glyceryl tri(meth)acrylate, dipentaerythritol tri(meth)acrylate, dipentaerythritol tetra(meth)acrylate, tripentaerythritol tetra(meth)acrylate, ethylene oxide adduct of pentaerythritol tetra(meth)acrylate, caprolactone adduct of dipentaerythritol penta(meth)acrylate, and caprolactone adduct of dipentaerythritol hexa(meth)acrylate. Among those listed above, pentaerythritol tri(meth)acrylate and pentaerythritol tetra(meth)acrylate are preferred.

In a linear ester compound obtained from a polyhydric alcohol, polycarboxylic acid or its anhydride, and (meth)acrylic acid or its derivative, preferred combination examples of polyhydric alcohol, polycarboxylic acid or its derivative, and (meth)acrylic acid are malonic acid/trimethylolethane/(meth)acrylic acid, malonic acid/trimethylolpropane/(meth)acrylic acid, malonic acid/glycerol/(meth)acrylic acid, malonic acid/pentaerythritol/(meth)acrylic acid, succinic acid/trimethylolethane/(meth)acrylic acid, succinic acid/trimethylolpropane/(meth)acrylic acid, succinic acid/glycerol/(meth)acrylic acid, succinic acid/pentaerythritol/(meth)acrylic acid, adipic acid/trimethylolethane/(meth)acrylic acid, adipic acid/trimethylolpropane/(meth)acrylic acid, adipic acid/glycerol/(meth)acrylic acid, adipic acid/pentaerythritol/(meth)acrylic acid, glutaric acid/trimethylolethane/(meth)acrylic acid, glutaric acid/trimethylolpropane/(meth)acrylic acid, glutaric acid/glycerol/(meth)acrylic acid, glutaric acid/pentaerythritol/(meth)acrylic acid, sebacic acid/trimethylolethane/(meth)acrylic acid, sebacic acid/trimethylolpropane/(meth)acrylic acid, sebacic acid/glycerol/(meth)acrylic acid, sebacic acid/pentaerythritol/(meth)acrylic acid, fumaric acid/trimethylolethane/(meth)acrylic acid, fumaric acid/trimethylolpropane/(meth)acrylic acid, fumaric acid/glycerol/(meth)acrylic acid, fumaric acid/pentaerythritol/(meth)acrylic acid,

itaconic acid/trimethylolethane/(meth)acrylic acid, itaconic acid/trimethylolpropane/(meth)acrylic acid, itaconic acid/glycerol/(meth)acrylic acid, itaconic acid/pentaerythritol/(meth)acrylic acid, maleic anhydride/trimethylolethane/(meth)acrylic acid, maleic anhydride /trimethylolpropane/(meth)acrylic acid, maleic anhydride/glycerol/(meth)acrylic acid, and maleic anhydride/pentaerythritol/(meth)acrylic acid.

Other examples of multifunctional monomer (B) are urethane (meth)acrylates obtained by reacting, based on 1 mole of polyisocyanate represented by formula (1) below, at least 3 moles of acrylic monomers having active hydrogen such as 2-hydroxyethyl (meth)acrylate, 2-hydroxypropyl (meth)acrylate, 2-hydroxy-3-methoxypropyl (meth)acrylate, N-methylol (meth)acrylamide, N-hydroxy (meth)acrylamide or the like; poly[(meth)acryloyloxy ethyl]isocyanurates such as tri(meth)acrylate of tris(2-hydroxyethyl)isocyanuric acid; epoxy polyacrylates; and urethane polyacrylates.

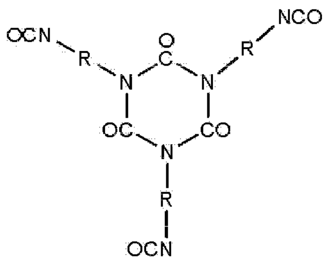

... (1)

(In the formula, "R" is a divalent hydrocarbon group having 1~12 carbon atoms that may include a substituent)

Examples of a polyisocyanate represented by formula (1) above are those obtained by tripolymerizing isocyanates such as trimethylolpropane toluylenediisocyanate, hexamethylene diisocyanate, tolylene diisocyanate, diphenylmethane diisocyanate, xylene diisocyanate, 4,4'-methylene bis(cyclohexyl isocyanate), isophorone diisocyanate, trimethylhexamethylene diisocyanate, and the like.

As for multifunctional monomer (B), those listed above may be used alone or in combination of two or more.

Considering the scratch resistance and surface hardness of the cured film layer, multifunctional monomer (B) is preferred to be ditrimethylol propane tetra(meth)acrylate, pentaerythritol tri(meth)acrylate, and pentaerythritol tetra(meth)acrylate.

(Multifunctional Monomer (C))

Multifunctional monomer (C) is a monomer having two (meth)acrylol groups. Examples of multifunctional monomer (C) are ethylene glycol di(meth)acrylate, dicyclopentenyl di(meth)acrylate, triethylene glycol di(meth)acrylate, tetraethylene glycol di(meth)acrylate, polyethylene glycol di(meth)acrylate, trimethylolpropane di(meth)acrylate, ethylene oxide adduct of trimethylolpropane di(meth)acrylate, tripropylene glycol di(meth)acrylate, neopentyl glycol di(meth)acrylate, 1,4-butanediol di(meth)acrylate, 1,6-hexane diol di(meth)acrylate, polyester di(meth)acrylate, polyethylene glycol di(meth)acrylate, dimethylol tricyclodecane di(meth)acrylate, hydroxy pivalic acid neopentyl glycol di(meth)acrylate, bisphenol A polyethoxy di(meth)acrylate, 1,10-decane diol di(meth)acrylate, and hydroxyl pivalic acid neopentyl glycol di(meth)acrylate. Among those listed above, 1,6-hexane diol di(meth)acrylate is preferred.

Those listed above may be used alone or in combination of two or more for multifunctional monomer (C).

A preferred combination of multifunctional monomers (A), (B) and (C) is one in which, for example, multifunctional monomer (A) is at least a monomer or a monomer mixture selected from dipentaerythritol penta(meth)acrylate and dipentaerythritol hexa(meth)acrylate, multifunctional monomer (B) is at least a monomer or a monomer mixture selected from pentaerythritol tri(meth)acrylate and pentaerythritol tetra(meth)acrylate, and multifunctional monomer (C) is 1,6-hexane diol di(meth)acrylate.

(Polymerization Initiator D)

Polymerization initiator (D) is a component to be used for curing a curable composition.

The content of polymerization initiator (D) is preferred to be 0.1~10 parts by mass based on total 100 parts by mass of multifunctional monomers (A), (B) and (C). When the content of a polymerization initiator (D) is at least 0.1 part by mass, productivity is more likely to increase, and when the content of a polymerization initiator (D) is no greater than 10 parts by mass, coloring tends to be suppressed in the obtained cured film layer.

Examples of a polymerization initiator (D) are a thermal polymerization initiator and a photopolymerization initiator.

Examples of a thermal polymerization initiator are organic peroxides such as methylethylketone peroxide,

benzoyl peroxide, dicumilperoxide, t-butyl hydroperoxide, cumene hydroperoxide, t-butylperoxyoctoate, t-butylperoxybenzoate and lauroyl peroxide; azo-based compounds such as azobis isobutyronitrile; and redox initiators such as those obtained by combining amines such as N,N-dimethylaniline and N,N-dimethyl-p-toluidine to peroxides listed above.

Examples of a photopolymerization initiator are thioxanthons such as benzophenone, 4,4-bis(diethylamino)benzophenone, 2,4,6-trimethylbenzophenone, methyl-o-benzoylbenzoate, 4-phenylbenzophenone, t-butylanthraquinone, 2-ethylanthraquinone, 2,4-diethyl thioxanthone, isopropyl thioxanthone, and 2,4-dichloro thioxanthone; acetophenones such as diethoxy acetophenone, 2-hydroxy-2-methyl-1-phenylpropane-1-on, benzil dimethylketal, 1-hydroxycyclohexylphenyl ketone, 2-methyl-2-morpholino(4-thiomethylphenyl)propane-1-on, and 2-benzil-2-dimethylamino-1-(4-morpholinophenyl)-butanone; benzoin ethers such as benzoin methyl ether, benzoin ethyl ether, benzoin isopropyl ether, and benzoin isobutyl ether; acyl phosphine oxides such as 2,4,6-trimethylbenzoyl diphenyl phosphine oxide, bis(2,6-dimethoxybenzoyl)-2,4,4-trimethyl pentyl phosphine oxide, and bis(2,4,6-trimethylbenzoyl)-phenyl phosphine oxide; methyl benzoyl formate; 1,7-bis acridinyl heptane; and 9-phenylacridine. Among those listed above, preferred examples are benzoin ethyl ether, 1-hydroxycyclohexyl phenyl ketone and 2-hydroxy-2-methyl-1-phenylpropane-1-on.

Those compounds listed above may be used alone or in combination of two or more to be used for polymerization initiator (D).

(Cured Film Layer)

The cured film layer according to an embodiment of the present invention is obtained by curing a curable composition listed above.

The thickness of a cured film layer is 22-40 μm. When the film thickness is at least 22 μm, the cured film layer exhibits excellent scratch resistance and surface hardness, and when the film thickness is no greater than 40 μm, the cured film layer exhibits excellent crack resistance, and warping is suppressed in the later-described subsequent resin laminate related to the present invention. Moreover, when the film thickness is no greater than 40 μm, breakage is suppressed when the resin laminate is cut, and cracking is suppressed from occurring in the cured film layer when a resin laminate is processed, resulting in excellent processability. The lower limit of the cured film thickness is preferred to be 25 μm and the upper limit is preferred to be 30 μm. Namely, the thickness of the cured film layer is preferred to be 25-30 μm.

Here, "thickness of cured film layer" indicates the thickness of a cured film layer positioned on a resin laminate.

The thickness of a cured film layer in the present application and in the scope of the patent claims is determined by a method described later in the examples below. Specifically, using a cross-sectional image of the obtained laminate taken by a differential interference contrast microscope, the film thickness is determined to be the maximum value measured from the resin substrate side of the cured film layer to the outermost surface of the surface layer side positioned opposite the resin substrate.

The surface of the cured film layer is preferred to have a pencil hardness of 6H or greater but 9H or lower, more preferably 7H or greater but 9H or lower, even more preferably 8H or greater but 9H or lower, measured according to JIS K5600-5-4. When the cured film layer has a surface with a pencil hardness of 6H or greater, scratching is less likely to occur even when it is used as a display front panel in various displays such as touch-panel screens, while it is directly touched by a user.

The cured film layer is obtained by using, for example, the following method: the aforementioned curable composition is coated on the later-described resin substrate surface, and then heat is applied or active energy rays are irradiated on the coated curable composition so as to cure the curable composition.

Examples of methods for coating the curable composition on the surface of the resin substrate are flowing, roller coating, bar coating, spray coating and air-knife coating.

In the embodiments of the present invention, to obtain the cured film layer with excellent appearance where no defects such as contaminants are observed, it is preferred that after the curable composition is coated on the resin substrate surface, the surface of the curable composition be covered by a resin film. After the surface of the curable composition is covered with the resin film, a smoothing process can be performed using a roll such as a rubber roll with JIS hardness of 40 degrees. By doing so, the cured film layer is obtained, to have a further uniform thickness, resulting in the cured film layer having higher smoothness and a desired thickness. Also, in the case that the surface of the curable composition is covered with the resin film when active energy rays are irradiated thereon, crosslinking reactions will progress sufficiently in the curable composition, and the cured film layer with an excellent degree of curing is more likely to be obtained. Accordingly, the cured film layer is more likely to exhibit excellent scratch resistance and surface hardness.

Examples of the resin film are polyethylene terephthalate (PET) film, polypropylene (PP) film, polyethylene (PE) film and polyvinylidene difluoride (PVDF) film. Among those, PET film is preferred from the viewpoints of cost performance and curing results of the cured film layer.

The thickness of the resin film is preferred to be 8~125 μm.

Examples of active energy rays are electron beams, ultraviolet rays and rays of visible light. From the viewpoints

of device cost and productivity, ultraviolet rays are preferred. The total amount of irradiated active energy rays is preferred to be 5-2,000 mJ/cm$^2$.

Examples of a light source of active energy rays are an ultraviolet fluorescent lamp, ultrahigh-pressure mercury lamp, high-pressure mercury lamp, intermediate-pressure mercury lamp, low-pressure mercury lamp, metal halide lamp, Ar laser, Hc-Cd laser, solid-state laser, xenon lamp, high-frequency induction mercury lamp, and solar light. Among them, an ultraviolet fluorescent lamp and a high-pressure mercury lamp are preferred from the viewpoint of the curing rate of the curable composition.

When the curable composition is cured by applying heat, a well-known hot air oven may be used as a heating device. The heating temperature is usually set at 40~120°C, and the heating duration is usually from 1 minute to 48 hours.

(Resin Substrate)

Examples of a resin for forming the resin substrate used in the embodiment of the present invention are polyolefin resins, (meth)acrylic resins, epoxy resins, polyimide resins, phenolic resins, polyester resins and polycarbonate resins.

The resin substrate with the resin listed above may be laminated for use.

Considering transparency properties, a (meth)acrylic resin containing a methyl methacrylate unit as its main component is preferred as the resin of the resin substrate.

A "(meth)acrylic resin containing a methyl methacrylate unit as its main component" indicates a polymer that contains a methyl methacrylate unit at 50~100 mass% and a monomer unit copolymerizable with methyl methacrylate at 0~50 mass%, and the total amount of each component does not exceed 100 mass% in the polymer, based on all the units forming the (meth)acrylic resin.

Examples of the monomer copolymerizable with methyl methacrylate are methacrylates such as ethyl methacrylate, isopropyl methacrylate, n-butyl methacrylate, iso-butyl methacrylate, tert-butyl methacrylate, 2-ethylhexyl methacrylate, phenyl methacrylate, and benzyl methacrylate; acrylates such as methyl acrylate, ethyl acrylate, n-butyl acrylate, iso-butyl acrylate, tert-butyl acrylate, and 2-ethylhexyl acrylate; unsaturated carboxylic acids such as acrylic acid, methacrylic acid, maleic acid, and itaconic acid; unsaturated carboxylic anhydrides such as maleic anhydride, and itaconic anhydride; maleimides such as N-phenyl maleimide, and N-cyclohexyl maleimide; vinyl monomers having a hydroxyl group such as 2-hydroxyethyl acrylate, 2-hydroxyethyl methacrylate, and 2-hydroxypropyl methacrylate; vinyl esters such as vinyl acetate, and vinyl benzoate; vinyl chloride, vinylidene chloride and their derivatives; nitrogen-containing vinyl monomers such as methacrylamide, and acrylonitrile; epoxy group-containing monomers such as glycidyl acrylate, and glycidyl methacrylate; and aromatic vinyl monomers such as styrene, and $\alpha$-methyl styrene. Among those listed above, preferred examples are n-butylacrylate, tert-butylmethacrylate and isobornyl (meth)acrylate.

Moreover, in addition to the monomers listed above, examples of monomers copolymerizable with a methyl methacrylate are alkanediol di(meth)acrylates such as ethylene glycol di(meth)acrylate, 1,2-propylene glycol di(meth)acrylate, 1,3-butylene glycol di(meth)acrylate, and 1,6-hexanediol di(meth)acrylate; polyoxyalkylene glycol di(meth)acrylates such as diethylene glycol di(meth)acrylate, dipropylene glycol di(meth)acrylate, triethylene glycol (meth)acrylate, tetraethylene glycol di(meth)acrylate, polyethylene glycol di(meth)acrylate and neopentyl glycol di(meth)acrylate; vinyl monomers having at least two ethylenically unsaturated bonds in the molecule, for example, divinylbenzene; unsaturated polyester prepolymer obtained from at least one polycarboxylic acid containing ethylenically unsaturated polycarboxylic acid and at least one diol; and vinyl ester prepolymer obtained by acrylically modifying a terminal of an epoxy group. Among those listed above, a preferred example is neopentyl glycol dimethacrylate.

The (meth)acrylic resin containing a methyl methacrylate unit as its main component is obtained by polymerizing a resin substrate material that contains a mixture of a radically polymerizable monomer containing methyl methacrylate as its main component; namely, based on the total mass of a (meth)acrylic resin, methyl methacrylate is contained at 50~100 mass% and a monomer copolymerizable with the methyl methacrylate at 0~50 mass%, in which the total amount of methyl methacrylate and a monomer copolymerizable with the methyl methacrylate does not exceed 100 mass%.

In the embodiments of the present invention, a syrup is used for the resin substrate material; a syrup may be prepared by mixing a polymer portion obtained by polymerizing a portion of the mixture of a radically polymerizable monomer and the rest of the radically polymerizable monomers. The mixture of a radically poymerizable monomer contains methyl methacrylate at 50~100 mass% and a monomer copolymerizable with the methyl methacrylate at 0-50 mass%, both based on the total mass of the (meth)acrylic resin, in which the total amount of methyl methacrylate and a monomer copolymerizable with the methyl methacrylate does not exceed 100 mass%. If required, a type of syrup may also be used as the resin substrate material, where a (meth)acrylic resin as the resin substrate material is dissolved in the mixture of a radically polymerizable monomer having methyl methacrylate as its main component.

The polymer portion or the (meth)acrylic resin as the resin substrate material in the above syrup is preferred to have a mass-average molecular weight of 300,000 or less. Also, the polymerization rate of the polymer portion is preferred to be at least 5 mass% but no greater than 50 mass% based on the total mass of the polymer portion. In addition, when the polymer portion or the (meth)acrylic resin is mixed with a radically polymerizable monomer in the

syrup, the mass ratio is preferred to be 2:98~50:50.

An initiator may be added to the resin substrate material.

Examples of the initiator are the same types of compounds as organic peroxides and azo-based compounds to be used as polymerization initiator (D).

The amount of the initiator is preferred to be 0.005~5 parts by mass based on 100 parts by mass of a radically polymerizable monomer in a (meth)acrylic resin substrate material.

If necessary, the resin substrate material may contain various additives such as a coloring agent, releasing agent, antioxidant, stabilizer, flame retardant, impact resistance improver, photostabilizer, ultraviolet absorber, polymerization inhibitor, and chain transfer agent.

Methods for polymerizing the resin substrate material are, for example, bulk polymerization, solution polymerization, emulsion polymerization and suspension polymerization. Among those, bulk polymerization is preferred, considering production cost, environmental load from the use of solvents or the like, and productivity and transparency properties of a (meth)acrylic resin shaped article.

(Resin Laminate)

The resin laminate according to an embodiment of the present invention is a laminate where a 22-40 μm-thick cured film layer is laminated on the resin substrate surface.

When evaluated in crack resistance testing, the resin laminate of an embodiment of the present invention is preferred to have crack resistance properties that prevent cracking when the resin laminate is bent at a curvature radius of 60 mm, more preferably, crack resistance properties that prevent cracking when the resin laminate is bent at a curvature radius of 40 mm. When the resin laminate is produced to have crack resistance properties that prevent cracking when the laminate is bent at a curvature radius of 60 mm, such a resin laminate is capable of producing a display front panel with excellent processability characteristics such as ease of handling.

<Evaluation Method of Crack Resistance Properties>

A 30 mm-wide, 120 mm-long and 1 mm-thick resin laminate is placed on a mold with a raised pattern with a predetermined curvature radius in such a way that the surface of a cured film layer faces outward. Then, after the resin laminate is bent along the mold with a raised pattern and is held in that position for 30 seconds, the surface of the cured film layer of the resin laminate is visually observed to determine if cracking has occurred.

Examples of a production method of the resin laminate related to the present invention are the following two methods:

(1) a method for forming the resin laminate by coating the curable composition on the resin substrate surface and by curing the composition; and

(2) a method for forming the resin laminate by forming a layer using the resin substrate material on a surface of the cured film layer obtained by curing the curable composition, and then by polymerizing the resin substrate material layer.

Among the above methods, method (2) is preferred from the viewpoint of balancing the pencil hardness of the cured film layer and the crack resistance of the resin laminate.

As for the above method (2), method (2-1) below is employed, for example.

<Method (2-1)>

First, the curable composition is coated on the inner surface of a die, which is then covered by a resin film. Next, after the curable composition is cured by irradiating active energy rays, the resin film is removed. Accordingly, a laminate mold is obtained where the cured film layer is laminated on the inner surface of the die. Then, the resin substrate material is poured into the laminate mold, and the resin substrate material is cured by cast polymerization. When the resin substrate with the cured film laminated thereon is taken out from the die, the resin laminate is obtained.

Namely, method (2-1) is for producing the resin laminate, including the following steps: the curable composition is coated on the inner surface of a die and the surface of the coated curable composition is covered with a resin film; after the curable composition is cured by irradiation of active energy rays, the resin film is removed so as to obtain a laminate mold where the cured film layer is laminated on the inner surface of the mold;
the resin substrate material is poured into the laminate mold and the resin substrate material is cured through cast polymerization; and the resin laminate is removed from the mold so as to obtain the resin laminate where the cured film layer is laminated on a surface of the resin substrate formed when the resin substrate material is cured.

The same type of film as the aforementioned resin film may be used for the above resin film.

The same type as the aforementioned active energy rays may be used for the above active energy rays, and the curing method using active energy rays may be the same as that described earlier.

Regarding the resin laminate with crack resistance properties that prevent cracking when it is bent at a curvature radius of 60 mm and which has the cured film layer with a pencil hardness of 6H or greater, such the resin laminate is obtained, for example, by forming a 22~40 μm-thick cured film layer on the resin substrate surface by employing method (2-1) above.

Also, regarding the resin laminate with crack resistance properties that prevent cracking when it is bent at a curvature radius of 60 mm and which has the cured film layer with a pencil hardness of 8H or greater, such the resin laminate is obtained, for example, by forming a 25-40 μm-thick cured film layer on the resin substrate surface by employing method (2-1) above.

Furthermore, regarding the resin laminate with crack resistance properties that prevent cracking when it is bent at a curvature radius of 40 mm and which has the cured film layer with a pencil hardness of 8H or greater, such the resin laminate is obtained, for example, by forming a 25-40 μm-thick cured film layer on the resin substrate surface by employing method (2-1) above to cure the curable composition that contains the multifunctional monomer (A), the multifunctional monomer (B), and the multifunctional monomer (C) at their respective amounts shown below:

multifunctional monomer (A): 25~45 parts by mass
multifunctional monomer (B) : 20~60 parts by mass
multifunctional monomer (C): 20-33 parts by mass
(the total amount of multifunctional monomers (A), (B) and (C) is 100 parts by mass)

The type of mold is a die or sheet, for example. The mold is usually formed when two dies are positioned opposite each other by setting the cured film layer laminated thereon to face inward. The surface of a die on which to laminate the cured film layer is preferred to be smooth.

The material for a mold is stainless steel, glass, resin or the like.

The mold may be formed with two dies made of the same material, or with two dies made of different materials.

As for a method for forming the mold, the following method may be employed, for example.

First, on the inner surface of a die, the cured film layer is formed to prepare a laminate die. Next, another die is positioned to face the laminate die, and a gasket is arranged around the periphery of the space formed by those dies to seal the dies. Accordingly, a laminate mold is formed with a predetermined capacity inside.

In the embodiments of the present invention, the cured film layer may be formed on the inner surface of one die, or of each of two dies.

The material for the gasket is preferred to be polyvinyl chloride, more preferably soft polyvinyl chloride.

The resin substrate material is poured into the laminate mold, and cast polymerization is conducted to form the resin substrate.

When the resin substrate integrated with the cured film is taken out from the mold, the resin laminate is obtained.

In the present application and the scope of patent claims, "cast polymerization" indicates a polymerization method: using a laminate mold formed with two opposing dies positioned at a predetermined distance and a sealing member arranged on their peripheries, the resin substrate material is poured into the laminate mold and polymerized therein.

A method for cast polymerization of the resin substrate material is, for example, a cell casting method in which the resin substrate material is poured into the laminate mold and heat is applied to the material.

In addition to the above, a continuous cast polymerization method is also used as a preferred method for conducting cast polymerization of the resin substrate material.

Continuous cast polymerization is conducted in a sealed space formed by a layered stainless-steel endless belt with a surface on which the cured film layer is laminated and another stainless-steel endless belt facing opposite the layered endless belt, both of which are set to run in the same direction at the same speed, and the same type of gasket as above is arranged on each of both sides of those stainless-steel endless belts. The resin substrate material is poured continuously from the upstream side into the sealed space and heat is applied thereto so as to polymerize the material continuously.

As for a method for applying heat to the laminate mold, for example, heat is applied to the laminate mold by a heat source such as 30~98°C hot water. The polymerization time is determined according to the progress of polymerization.

In the embodiments of the present invention, thermal treatment may be conducted to apply heat at 90~150°C using an infrared heater or the like under air atmosphere to enhance the polymerization rate of the resin substrate material. The polymerization time is determined according to the progress of polymerization. In addition, cooling treatment such as blowing air may also be conducted, if necessary, after the thermal treatment.

As to the thickness of the resin laminate, a range of 0.2 ~2 mm is sufficient. However, a range of 0.3 ~1 mm is preferred.

(Display front panel)

Without adding any further process, the resin laminate according to any of the above-described embodiments of the present invention may be used as a display front panels as all embodiment of the present invention.

EXAMPLES

The present invention is described in detail with reference to the examples below. Various evaluations were conducted in the following. "Part(s)" means "part(s) by mass."

(1) Thickness of Cured Film Layer

Using a cross-sectional image of a resin laminate taken by a differential interference contrast microscope, the=thickness of a cured film layer is measured.

(2) Haze

The haze of a resin laminate was measured using "Haze Meter NDH4000'' (brand name) made by Nippon Denshoku Industries, Co., Ltd., based on the method described in JIS K7136.

(3) Scratch Resistance Properties

The scratch resistance properties on the surface of a resin laminate were evaluated by obtaining the difference in haze values (Δhaze %) before and after the scratch test was conducted as follows: a 24 mm-diameter circular pad with attached #000 steel wool (brand name: Bon Star No. 000, made by Nippon Steel Wool Co., Ltd.) was placed on the surface of a cured film layer of the resin laminate, and the pad was moved back and forth 100 times on a 20 mm-long route under a load of 2,000 grams.

$$[\text{scratch resistance property } (\Delta\text{haze } (\%))] = [\text{haze value } (\%) \text{ after scratch test}] - [\text{haze value } (\%) \text{ before scratch test}]$$

(4) Pencil Hardness

The pencil hardness of the cured film layer on the surface of a resin laminate was measured according to JIS K5600-5-4 to evaluate the surface hardness.

(5) Crack Resistance Properties

The crack resistance properties on the surface of a resin laminate were evaluated by observing cracking when the resin laminate was bent at three different curvature radii of 40 mm, 60 mm and 75 mm.

A 30 mm-wide, 120 mm-long and 1 mm-thick resin laminate was placed on a raised pattern with a predetermined curvature radius in such a way that the surface of the cured film layer faced outward. Then, after the resin laminate was bent along the raised pattern and held in that position for 30 seconds, the surface of the cured film layer of the resin laminate was visually observed to determine if cracking had occurred and was evaluated according to the following criteria. Here, no cracking means there was no cracking at all, and cracking means at least one crack was observed.

[A]: no cracking
[B]: cracking

In the following, abbreviations indicate their respective compounds shown below.

DPHA: mixture of dipentaerythritol pentaacrylate and dipentaerythritol hexaacrylate (brand name, made by Nippon Kayaku Seizo Co., Ltd.)
U-6HA: urethane compound obtained by reacting 1 mole of triisocyanate formed by trimerization of hexamethylene

diisocyanate to 3 moles of 3-acryloyloxy-2-hydroxypropyl methacrylate (brand name, made by Shin-Nakamura Chemical Co., Ltd.)
DPCA-30: mixture of a caprolactone adduct of dipentaerythritol pentaacrylate and caprolactone modified dipentaerythritol hexaacryalte (brand name, made by Nippon Kayaku)
M305: mixture of pentaerythritol triacrylate and pentaerythritol tetraacrylate (brand name, made by Toagosei Co., Ltd.)
M309: trimethylol propane triacrylate (brand name, made by Toagosei)
C6DA: 1,6-hexanediol diacrylate (brand name, made by Osaka Organic Chemical Industry Ltd.)
BEE: benzoin ethylether (brand name, made by Seiko Chemical Co., Ltd.)
LUCIRIN TPO: diphenyl-(2,4,6-trimethyl benzoyl) phosphine oxide (brand name, made by BASF Japan)
IRGACURE 184: 1-hydroxycyclohexyl phenylketone (brand name, made by BASF Japan)

(Example (1))

Curable composition (1) was prepared by mixing 30 parts of DPHA, 10 parts of U-6HA, 30 parts of M305, 30 parts of C6DA and 1.5 parts of BEE.

Using an SUS304 plate with a mirror surface as a mold, curable composition (1) was coated on the mirror surface of the mold, and a 12 μm-thick PET film "NS" (brand name, made by Teijin DuPont Films Japan Ltd.) was covered thereon to obtain uncured film layer (1-1).

On the PET film of uncured film layer (1-1), a rubber roll of JIS hardness of 40 degrees was pressed to squeeze out the excess amount of curable composition (1) while preventing air bubbles. Accordingly, uncured film layer (1-2) was obtained. Next, the uncured film layer (1-2) with the PET-film side facing upward was passed 20 cm below a 40W fluorescent ultraviolet lamp (brand name: FL40BL, made by Toshiba Lighting & Technology Corporation) at a speed of 2 m/min. so that curable composition (1) was cured. As a result, cured film layer (1-3) was obtained. After that, the PET film on cured film layer (1-3) was removed and cured film layer (1-4) was obtained.

Next,cured film layer (1-4) with the cured film portion side facing upward was passed 20 cm below a high-pressure mercury lamp with an output of 30W/$cm^2$ at a speed of 3 m/min. to irradiate ultraviolet rays on cured film layer (1-4) so that the film layer was further cured. Accordingly, laminate mold (1A) was prepared where a 39 μm-thick cured film layer of curable composition (1) was laminated on the mold. Laminate mold (1A) and an SUS 304 plate without a cured film layer were positioned opposite each other with the cured film layer of laminate mold (1A) facing inward. Then, the peripheries of two SUS304 plates were sealed using a gasket made of soft polyvinyl chloride to form laminate mold (1B).

Next, a resin substrate material (1C) was prepared containing 100 parts of a mixture formed with 20 parts of polymethylmethacrylate with a mass-average molecular weight of 220,000 and 80 parts of methyl methacrylate, 0.01 part of
2-(5-methyl-2-hydroxyphenyl)-benzotriazole, 0.05 parts of azobis dimethyl valeronitrile, and 0.005 parts of dioctyl sodium sulfosuccinate. Then, resin substrate material (1C) was poured into laminate mold (1B) after remaining dissolved air was removed under vacuum atmosphere, and the material was polymerized in a water bath of 80°C for an hour and in an air oven of 130°C for an hour. After the polymerized mixture was cooled, the SUS304 plates were removed from laminate mold (1B) to obtain 1 mm-thick resin laminate (1D) having the cured film layer on one of its surfaces.

The thickness of the cured film layer, haze, scratch resistance properties, pencil hardness, and crack resistance properties of resin laminate (1D) were evaluated using the aforementioned evaluation methods respectively. The results are shown in Table 1.

The cured film layer of resin laminate (1D) exhibited excellent scratch resistance and surface hardness: the scratch resistance properties were 0.03% and the pencil hardness was 9H.

(Example 2)

Endless belts, each made of 2800 mm-wide and 1 mm-thick SUS304 with a mirror surface, were paired to face each other and set to run in the same direction at the same speed. They were stopped temporarily, and curable composition (1) having the same components as in Example 1 was coated on the upper endless belt of the pair, and a 12 μm-thick PET film "NS" (brand name, made by Teijin DuPont Films Japan Ltd.) was covered on the coating to obtain uncured film layer (2-1).

A rubber roll of JIS hardness of 40 degrees was pressed against the PET film covered on uncured film layer (2-1) so that the excess amount of curable composition (1) was squeezed out while preventing air bubbles. Accordingly, uncured film layer (2-2) was formed. Next, the endless belts resumed running with the PET-film side of uncured film layer (2-2) facing upward, and were passed 20 cm below a fluorescent ultraviolet lamp with an output of 40W/$cm^2$ (brand name: FL40BL, made by Toshiba Lighting & Technology Corporation) at a speed of 2 m/min. to cure curable composition

(1). Accordingly, cured film layer (2-3) was obtained. After that, the PET film on cured film layer (2-3) was removed and cured film layer (2-4) was obtained.

Next, the cured film layer (2-4) with the cured film portion side facing upward was passed 20 cm below a high-pressure mercury lamp with an output of 30W/$cm^2$ at a speed of 3 m/min. to irradiate ultraviolet rays on cured film layer (2-4). Accordingly, laminate mold (2A) was obtained where the 32 μm-thick cured film layer of curable composition (1) was laminated on the mold.

Both side-ends of the endless belt with a cured film layer (laminate mold (2A)) and another endless belt were sealed with a soft polyvinyl chloride gasket running at the same speed as the belts so that laminate mold (2B) was formed to have a space having a 1.5 mm distance between the pair of endless belts. Then, resin substrate material (2C) was poured into laminate mold (2B) at a predetermined feed rate using a metering pump, and material (2C) was polymerized. During polymerization, heat was applied to the material with a hot-water shower of 78°C for 45 minutes while the endless belts were running. Then, a thermal treatment was further conducted at 135°C for 30 minutes using an infrared heater, and then the material was cooled to 85°C by blowing air for 10 minutes. After the cooling treatment, 1 mm-thick resin laminate (2D) having the cured film layer all one side was peeled off continuously from the endless belt.

The thickness, haze, scratch resistance properties, pencil hardness, and crack resistance properties of the cured film layer of resin laminate (2D) were evaluated using the aforementioned evaluation methods respectively. The results are shown in Table 1.

[Examples 3-6, Comparative Examples 1~5]

Each resin laminate was prepared by the same procedure as in Example 1 except that the components of each curable composition and the thickness of each cured film layer were specified in Table 1.

The thickness, haze, scratch resistance properties, pencil hardness, and crack resistance properties of the cured film layer of the resin laminate were each evaluated using the aforementioned evaluation methods respectively. The results are shown in Table 1.

[Example 7]

The curable composition as specified in Table 1 was coated on a surface (no hard coat layer formed thereon) of a 1 mm-thick methacrylic resin plate "Acrylite MR 100" (brand name, made by Mitsubishi Rayon Co. Ltd.).

Next, a PET film "OX-50" (brand name, made by Teijin DuPont Films) was laminated so that its highly smoothed surface made contact with the coated surface of the curable composition. Then, the laminate was pressed by a pressing roll at a speed of 7 m/min. so that a cured film layer of the curable composition had a thickness of 25 μm.

Next, the methacrylic resin plate, curable composition and the PET film were layered in that order and were kept still for 1 minute, and a laminate was obtained. Then, the laminate was passed 24 cm below a metal halide lamp with an output of 120 W/$cm^2$ at a speed of 2.5 m/min. to cure the curable composition. Accordingly, a cured laminate was obtained.

After the above, the PET film was removed from the cured laminate to obtain a resin laminate with the cured film layer formed on the methacrylic resin plate.

The thickness, haze, scratch resistance properties, pencil hardness, and crack resistance properties of the cured film layer of resin laminate (2D) were evaluated using the aforementioned evaluation methods respectively. The results are shown in Table 1.

Table 1

| | | | Example 1 | Example 2 | Example 3 | Example 4 | Example 5 | Example 6 | Example 7 | Comp. Example 1 | Comp. Example 2 | Comp. Example 3 | Comp. Example 4 | Comp. Example 5 |
|---|---|---|---|---|---|---|---|---|---|---|---|---|---|---|
| type of curable composition | | | (1) | (1) | (2) | (2) | (3) | (4) | (4) | (5) | (1) | (1) | (6) | (7) |
| component of curable composition | A | DPHA | 30 | 30 | 20 | 20 | 50 | 30 | 30 | — | 30 | 30 | 15 | 55 |
| | B | U6HA | 10 | 10 | — | — | — | 10 | 10 | 10 | 10 | 10 | — | — |
| | | DPCA-30 | — | — | — | — | — | — | — | 30 | — | — | — | — |
| | | M305 | 30 | 30 | 45 | 45 | — | 30 | 30 | 30 | 30 | 30 | 45 | — |
| | | M309 | — | — | — | — | 32.5 | — | — | — | — | — | — | 35 |
| | C | C6DA | 30 | 30 | 35 | 35 | 17.5 | 30 | 30 | 30 | 30 | 30 | 40 | 10 |
| | D | BEE | 1.5 | 1.5 | 1.5 | 1.5 | 1.5 | — | — | 1.5 | 1.5 | 1.5 | 1.5 | 1.5 |
| | | Lucirin TPO | — | — | — | — | — | 2 | 2 | — | — | — | — | — |
| | | IRGACURE184 | — | — | — | — | — | 6 | 6 | — | — | — | — | — |
| evaluation result of laminate | thickness of cured film layer (μm) | | 39 | 26 | 33 | 24 | 26 | 22 | 25 | 24 | 42 | 20 | 24 | 30 |
| | haze | | 0.05 | 0.05 | 0.06 | 0.04 | 0.07 | 0.06 | 0.05 | 0.10 | 0.06 | 0.03 | 0.05 | 0.08 |
| | scratch resistance: Δ haze | | 0.03 | 0.05 | 0.08 | 0.10 | 0.02 | 0.05 | 0.12 | 0.21 | 0.02 | 0.13 | 0.21 | 0.02 |
| | pencil hardness | | 9H | 8H | 8H | 7H | 9H | 7H | 6H | 5H | 9H | 5H | 5H | 9H |
| | crack resistance | 40R | B | A | B | A | B | A | B | A | B | A | A | B |
| | | 60R | A | A | A | A | A | A | A | A | B | A | A | B |
| | | 75R | A | A | A | A | A | A | A | A | A | A | A | B |

Since the resin laminate of Comparative Example 1 did not contain multifunctional monomer (A), it exhibited a low level of scratch resistance and surface hardness.

Since the cured film layer of the resin laminate of Comparative Example 2 was set to have a significantly thick film thickness, it exhibited insufficient crack resistance.

Since the cured film layer of the resin laminate of Comparative Example 3 was set to have a significantly thin film thickness, it exhibited a low level of scratch resistance and surface hardness.

Since the resin laminate of Comparative Example 4 was set to have a low content of multifunctional monomer (A) and a high content of multifunctional monomer (C) in the curable composition, it exhibited a low level of scratch resistance and surface hardness.

Since the resin laminate of Comparative Example 5 was set to have a high content of multifunctional monomer (A) and a low content of multifunctional monomer (C) in the curable composition, it exhibited insufficient crack resistance.

[POTENTIAL INDUSTRIAL APPLICABILITY]

The resin laminate and its production method according to the embodiments of the present invention as well as a display front panel formed by using the resin laminate are low cost and lightweight, and exhibit excellent design flexibility. Thus, they are suitable for use in a display front panel for a touch-panel screen from an industrial point of view.

[DESCRIPTION OF NUMERICAL REFERENCES]

1 resin substrate
2 cured film layer
3 resin laminate

## Claims

1. A resin laminate, comprising
a cured film layer; and
a resin substrate,
wherein the cured film layer is obtained by curing a curable composition that contains

    (A) at least one of multifunctional monomer selected from dipentaerythritol penta(meth)acrylate and dipentaerythritol hexa(meth)acrylate,
    (B) a multifunctional monomer that has at least 3 (meth)acryloyl groups and is not component (A),
    (C) a multifunctional monomer having two (meth)acryloyl groups, and
    (D) a polymerization initiator;

    the total amount of components (A), (B) and (C) is 100 parts by mass;
based on the total 100 parts by mass of components (A), (B) and (C), the content of component (A) is 20-50 parts by mass, the content of component (B) is 20-60 parts by mass, and the content of component (C) is 15~35 parts by mass;
the thickness of the cured film layer is 22~40 μm; and
the cured film layer is laminated on a surface of the resin substrate.

2. The resin laminate according to Claim 1, wherein the thickness of the cured film layer is 25-40 μm.

3. The resin laminate according to Claim 1, wherein the cured film layer is obtained by curing the curable composition containing 24-45 parts by mass of component (A), 20-60 parts by mass of component (B), and 20-33 parts by mass of component (C), based on 100 parts by mass of the total amount of components (A), (B) and (C), and the thickness of the cured film layer is 25-30 μm.

4. The resin laminate according to Claim 1, whereon the pencil hardness is at least 6H but no higher than 9H.

5. The resin laminate according to Claim 1, wherein the pencil hardness is at least 8H but no higher than 9H.

**6.** The resin laminate according to Claim 1, further comprising crack resistance properties that prevent cracking when the resin laminate is bent at a curvature radius of 60 mm.

**7.** The resin laminate according to Claim 1, further comprising crack resistance properties that prevent cracking when the resin laminate is bent at a curvature radius of 40 mm.

**8.** The resin laminate according to Claim 1, wherein the resin substrate is a methacrylic resin comprising a methyl methacrylate unit as its main component.

**9.** A method for producing a resin laminate, comprising:

by coating a curable composition on the inner surface of a die and curing the coating, forming a laminate mold on which a 22-40 μm-thick cured film layer of the curable composition is laminated;
pouring into the laminate mold a resin substrate material containing a mixture of a radically polymerizable monomer having a main component of methyl methacrylate in such a way that the material makes contact with the cured film layer of the laminate mold; and
forming a resin substrate by cast polymerizing the resin substrate material poured into the laminate mold,
wherein the cured film layer is laminated on a surface of the resin substrate;
the curable composition contains (A) at least one of multifunctional monomer selected from dipentaerythritol penta(meth)acrylate and dipentaerythritol hexa(meth)acrylate, (B) a multifunctional monomer that has at least 3 (meth)acryloyl groups and is not component (A), (C) a multifunctional monomer having two (meth)acryloyl groups, and (D) a polymerization initiator;
the total amount of components (A), (B) and (C) is 100 parts by mass; and
based on the total 100 parts by mass of components (A), (B) and (C), the content of component (A) is 20~50 parts by mass, the content of component (B) is 20~60 parts by mass, and the content of component (C) is 15~35 parts by mass.

**10.** The method for producing a resin laminate according to Claim 9, wherein the thickness of the cured film layer is 25-40 μm.

**11.** The method for producing a resin laminate according to Claim 9, wherein the cured film layer is obtained by curing the curable composition that contains component (A) at 24~45 parts by mass, component (B) at 20-60 parts by mass, and component (C) at 20-33 parts by mass, all based on 100 parts by mass of the total amount of components (A), (B) and (C), and
the thickness of the cured film layer is 25~30 μm.

**12.** A display front panel formed by using the resin laminate according to Claim 1.

**13.** A display front panel formed by using a resin laminate obtained by the method according to Claim 9.

*FIG. 1*

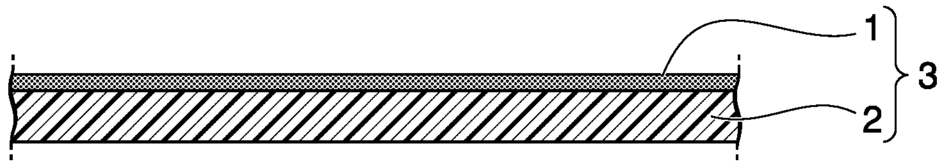


*FIG. 2*

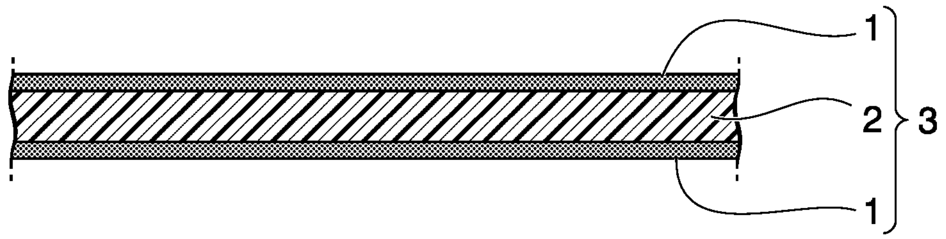

**INTERNATIONAL SEARCH REPORT**

International application No.
PCT/JP2013/084163

A. CLASSIFICATION OF SUBJECT MATTER
*B32B27/30*(2006.01)i, *B29C39/10*(2006.01)i, *C08F220/20*(2006.01)i, *C08F290/06*(2006.01)i, *G09F9/00*(2006.01)i

According to International Patent Classification (IPC) or to both national classification and IPC

B. FIELDS SEARCHED

Minimum documentation searched (classification system followed by classification symbols)
B32B27/30, B29C39/10, C08F220/20, C08F290/06, G09F9/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-280064 A (Mitsubishi Rayon Co., Ltd.), 16 December 2010 (16.12.2010), claims; paragraphs [0013], [0026], [0061]; examples 1 to 3 (Family: none) | 1-13 |
| Y | JP 2010-77282 A (Mitsubishi Rayon Co., Ltd.), 08 April 2010 (08.04.2010), claims; paragraphs [0015], [0019], [0023], [0055]; example 3 (Family: none) | 1-13 |
| Y | JP 2006-198823 A (Mitsubishi Rayon Co., Ltd.), 03 August 2006 (03.08.2006), claims; paragraph [0027]; examples 1 to 2 (Family: none) | 1-11 |

☒ Further documents are listed in the continuation of Box C.    ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 28 January, 2014 (28.01.14) | 04 February, 2014 (04.02.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/084163

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2003/026881 A1 (Fuji Photo Film Co., Ltd.), 03 April 2003 (03.04.2003), claims; page 3, lines 34 to 40; page 4, line 48 to page 5, line 7; examples & TW 225159 B & CN 1558824 A | 1-13 |
| Y | JP 2001-287308 A (Toray Industries, Inc.), 16 October 2001 (16.10.2001), claims; paragraphs [0007], [0055] (Family: none) | 1-13 |
| Y | JP 2007-276310 A (Mitsubishi Rayon Co., Ltd.), 25 October 2007 (25.10.2007), claim 2; paragraphs [0009], [0042], [0047]; examples (Family: none) | 9-11,13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013103769 A
- JP S5497633 A
- JP 2005248070 A